(19) **Europäisches Patentamt**
**European Patent Office**
**Office européen des brevets**

(11) **EP 4 468 031 A1**

(12) **EUROPEAN PATENT APPLICATION**
published in accordance with Art. 153(4) EPC

(43) Date of publication:
**27.11.2024 Bulletin 2024/48**

(21) Application number: **22922067.8**

(22) Date of filing: **24.11.2022**

(51) International Patent Classification (IPC):
**G01S 7/4915** (2020.01)        **G01C 3/06** (2006.01)
**G01S 17/894** (2020.01)

(52) Cooperative Patent Classification (CPC):
**G01C 3/06; G01S 7/4915; G01S 17/894**

(86) International application number:
**PCT/JP2022/043297**

(87) International publication number:
**WO 2023/139916 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.01.2022 JP 2022007779**

(71) Applicant: **KOITO MANUFACTURING CO., LTD.
Minato-ku, Tokyo, 108-8711 (JP)**

(72) Inventors:
• **ITABA Koji**
  **Shizuoka-shi, Shizuoka 424-8764 (JP)**
• **HOSHI Kenichi**
  **Shizuoka-shi, Shizuoka 424-8764 (JP)**

(74) Representative: **Grünecker Patent- und
Rechtsanwälte
PartG mbB
Leopoldstraße 4
80802 München (DE)**

(54) **MEASUREMENT DEVICE**

(57) A measurement device (1) comprises: a sensor having a light reception element (PD) that generates an electric charge based on the degree of light exposure, and a plurality of accumulation units (CS 1-CS4) that accumulate charges allocated according to an exposure period; a signal acquisition unit that acquires signal values (S 1-S4) according to the electric charges of the plurality of accumulation units (CS1-CS4); and a correction unit (35) that identifies, from among a plurality of signal values (S 1)-S4, a minimum signal value (Smin) indicating the smallest exposure amount, and that, on the basis of the minimum signal value (Smin), corrects the signal values (S1-S4).

FIG.5

$$T_x = T_{j+1} - Lw \times \frac{S_j - S_{min}}{(S_j - S_{min}) + (S_{j+1} - S_{min})}$$

$S_j$ , $S_{j+1}$ : signal value of the exposure period for which the reflected light is exposed
(in this case, $S_j = S_2$, $S_{j+1} = S_3$)

$S_{min}$ : smallest signal value (in this case, $S_1$ or $S_4$)

$$L = \frac{Co \times T_x}{2} \quad (Co: \text{SPEED OF LIGHT})$$

EP 4 468 031 A1

**Description**

TECHNICAL FIELD

The present disclosure relates to a measurement apparatus.

BACKGROUND ART

Document 1 discloses an indirect-ToF (Time of Flight) measurement apparatus that measures the distance to an object based on emission of laser light (pulsed light) and exposure of reflected light back. Also, Non-Patent Document 1 discloses a technique for removing background light in an indirect ToF measurement apparatus.

CITATION LIST

PATENT LITERATURE

Patent Document 1: JP-A-2021-25833

NON-PATENT LITERATURE

Non-Patent Document 1 : Lateral Electric Field Controlled ToF Distance Image Sensor with Intra-pixel Background Light Cancelling Function Technical Report / 38.15 (2014)

SUMMARY OF INVENTION

TECHNICAL PROBLEM

In Non-Patent Document 1, an exposure period for detecting background light is provided before light emission. Accordingly, such an arrangement reduces the measurable region for a single light emission. This makes it difficult to improve the frame rate (FPS).
An object of the present disclosure is to improve the frame rate while suppressing the influence of background light.

SOLUTION TO PROBLEM

A measurement apparatus according to an embodiment of the present disclosure for achieving the above object includes:

a sensor including a light-receiving element configured to generate charge according to an exposure amount, and a plurality of accumulation portions configured to accumulate the charge distributed according to an exposure period;
a signal acquisition unit configured to acquire signal values corresponding to the charge in the plurality of accumulation portions, respectively; and
a correction unit configured to identify a minimum signal value that indicates the smallest exposure amount from among the plurality of signal values, and to correct the signal value based on the minimum signal value.

ADVANTAGEOUS EFFECT OF THE INVENTION

With the present disclosure, this arrangement is capable of improving the frame rate while suppressing the influence of background light.

BRIEF DESCRIPTION OF DRAWINGS

Fig. 1A is an explanatory diagram showing the configuration of a measurement apparatus.
Fig. 1B is an explanatory diagram showing the light emission timing and the exposure timing.
Fig. 2 is an explanatory diagram showing distance image generation by indirect ToF.
Fig. 3 is a diagram for explaining an example of the configuration of an image sensor.

Fig. 4 is an explanatory diagram showing image acquisition.

Fig. 5 is an explanatory diagram for explaining the relation between light emission and exposure according to the first embodiment.

Fig. 6 is an explanatory diagram for explaining the relation between light emission and exposure according to the second embodiment.

Fig. 7 is an explanatory diagram showing the correction processing according to the second embodiment.

Fig. 8 is a diagram showing an example of a method for acquiring correction values.

Fig. 9 is an explanatory diagram for explaining the relation between light emission and exposure in the comparative example.

DESCRIPTION OF EMBODIMENTS

Description will be made with reference to the drawings regarding an embodiment of the present disclosure. It should be noted that, in the following description, the same or similar components are denoted by the same reference numerals, and redundant description thereof may be omitted.

= first embodiment =

«<Summary of measurement apparatus»>

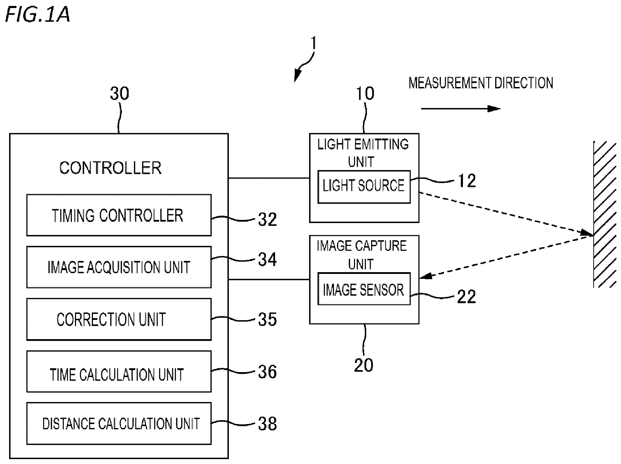

Fig. 1A is an explanatory diagram showing the configuration of a measurement apparatus 1. The measurement apparatus 1 shown in Fig. 1A is a ToF (Time of Flight) apparatus that measures the distance to an object in front of the apparatus. In the present embodiment, an indirect ToF-type camera is used. Such a measurement apparatus 1 is capable of removing the effects of fog and rain. Furthermore, the measurement apparatus 1 is capable of capturing images or measuring images even in a case of adverse weather. The measurement apparatus 1 is provided, for example, in a vehicle.

As shown in Fig. 1A, the measurement apparatus 1 includes a light emitting unit 10, an image capture unit 20, and a controller 30.

The light emitting unit 10 irradiates (projects) light into a space to be captured. The light emitting unit 10 emits light according to an instruction from the controller 30. The light emitting unit 10 includes a light source 12 and a light projection optical system (not shown) configured to emit light generated by the light source 12.

The light source 12 is a light source including a light emitting element. The light source 12 emits pulsed laser light under the control of the controller 30. Hereinafter, this pulsed light will also be referred to as a "light emission pulse".

The image capture unit 20 (ToF imaging camera) captures an image based on exposure of light reflected by an object to be subjected to distance measurement. The image capture unit 20 includes an image sensor 22 and an exposure optical system (lens, etc.: not shown) configured to guide incident (exposed) light to the image sensor 22.

The image sensor 22 captures an image of an image capture target according to an instruction from the controller 30, and outputs image data generated by the image capture to the image acquisition unit 34 of the controller 30. The values (pixel data) of the pixels constituting the image data indicate signal values that correspond to the exposure amount. Description will be made below regarding the image sensor 22 in detail.

The controller 30 controls the measurement apparatus 1. The controller 30 is implemented by a hardware configuration such as an element such as a memory or a CPU, or a circuit. The controller 30 implements a predetermined function when the CPU executes a program stored in a memory. Fig. 1A shows various functions implemented by the controller 30. The controller 30 includes a timing controller 32, an image acquisition unit 34, a correction unit 35, a time calculation unit 36, and a distance calculation unit 38.

The timing controller 32 controls the light emission timing of the light emitting unit 10 and the exposure timing of the image capture unit 20. The light emission timing and the exposure timing will be described later.

The image acquisition unit 34 acquires image data (pixel data of each pixel) from the image sensor 22 of the image capture unit 20. In other words, the image acquisition unit 34 acquires, from the image sensor 22, a signal value that corresponds to the exposure amount of each pixel (that is, it corresponds to the charge of the accumulation portion described later). Furthermore, the image acquisition unit 34 includes a memory (not shown) that stores the acquired data (signal value). It should be noted that the image acquisition unit 34 corresponds to a "signal acquisition unit".

The correction unit 35 corrects the value of the data (signal value) of the image sensor 22. It should be noted that description will be made below regarding the correction.

The time calculation unit 36 calculates an arrival time (light flight time: ToF) from the emission of the light emitting unit 10 to the arrival of the reflected light at the image sensor 22.

The distance calculation unit 38 calculates the distance based on the arrival time of the light. As will be described later, the distance calculation unit 38 calculates the distance for each pixel, thereby allowing the measurement apparatus 1 to acquire the distance image. In the present embodiment, the time calculation unit 38 corresponds to a "calculation unit".

«About Indirect ToF»

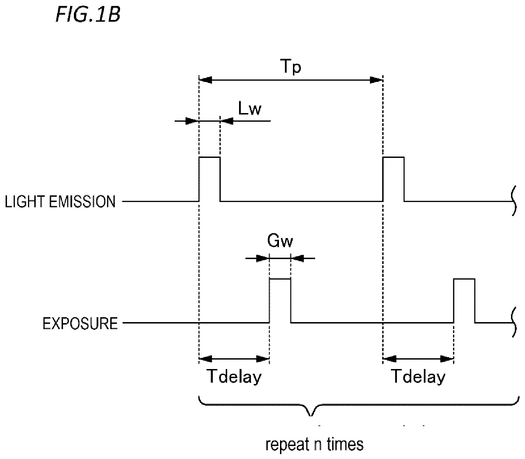

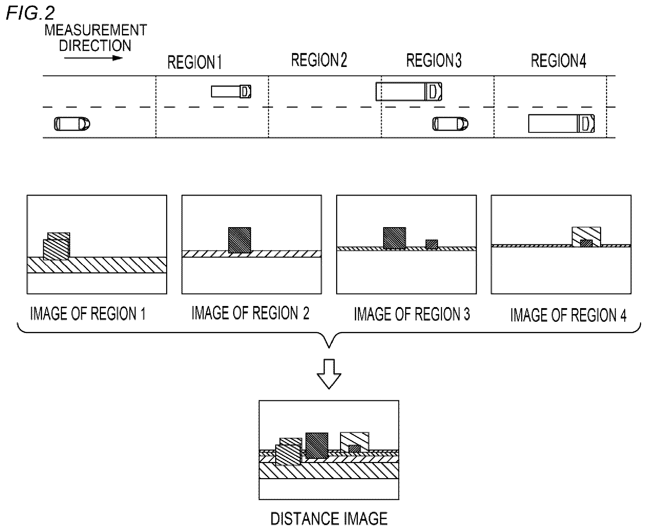

Fig. 1B is an explanatory diagram showing the light emission timing and the exposure timing. Also, Fig. 2 is an explanatory diagram showing the distance image generation by the indirect ToF.

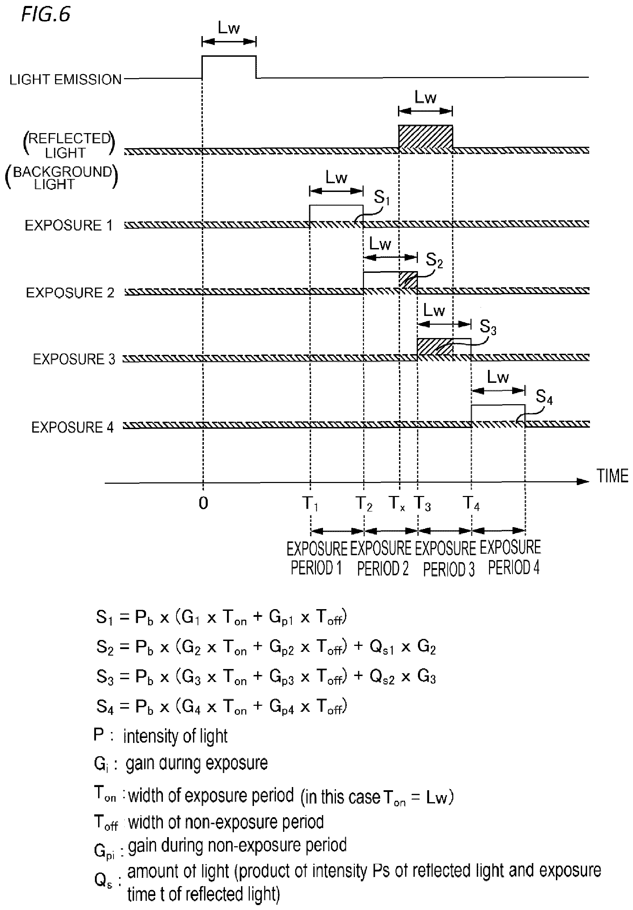

First, as shown in Fig. 6, the controller 30 (the timing controller 32) causes the light emitting unit 10 to emit a light emission pulse. The width of the light emission pulse (hereinafter, referred to as "pulse width") is Lw.

Furthermore, the controller 30 (the timing controller 32) causes the image sensor 22 of the image capture unit 20 to expose the reflected light after a delay time Tdelay has been passed since the light emission pulse has been emitted. The exposure period is set according to the delay time Tdelay and the exposure width Gw.

The delay time Tdelay is a time period from emission of the light emission pulse to the start of the exposure period. The delay time Tdelay is set according to the distance to the region to be measured. That is to say, in a case in which the time period from the emission of the light emitting unit 10 to the start of the exposure by the image sensor 22 is set to be short, an image of an object (an object that reflects light) in a near-distance region can be acquired. Conversely, in a case in which the time period from the emission of the light emitting unit 10 to the exposure by the image sensor 22 is set to be long, an image of an object in a far-distance region can be acquired.

The exposure width Gw is the width of the exposure period (i.e., the period from the start of exposure to the end of exposure). In the present embodiment, the exposure width Gw is the same as the pulse width Lw (Gw = Lw). The width of the exposure period defines the length of the region to be measured in the measurement direction. Accordingly, as the exposure width Gw becomes smaller, the distance resolution becomes higher.

With the present embodiment, as shown in Fig. 2, different exposure periods are set according to the distance to the region to be measured. It should be noted that, in Fig. 2, four regions are shown for simplification. However, in actuality, the number N of the regions is larger than 4.

The light emission and the exposure are repeated multiple times with the period Tp shown in Fig. 1B. This is for the purpose of storing charge in the image sensor 22 described later. Furthermore, as the area i becomes farther, the number of repetitions ni is set to a larger value. This is because as the region becomes farther, the reflected light becomes weaker.

As an image acquired for each region, an object (an object that reflects light) existing in the region is captured. The image for each region will sometimes be referred to as a "range image". It should be noted that the values (image data) of the pixels constituting the image indicate signal values that correspond to the exposure amount.

As shown in Fig. 2, the measurement apparatus 1 according to the present embodiment is capable of acquiring image data for multiple regions at different distances, and of acquiring a distance image that represents the distance to an object based on the multiple acquired image data. The distance image may be referred to as a "frame".

It should be noted that, in a case in which one region is capable of measurement for a single emission, acquisition of image data for many regions takes time, leading to a long measurement time. This is because such an arrangement makes it difficult to increase the FPS speed. Accordingly, in the present embodiment, multiple exposure periods are set for one emission, and multiple regions are measured for one emission. For this reason, with the present embodiment, a multi-tap CMOS image sensor is used as the image sensor 22. It should be noted that, although the image sensor 22 of the present embodiment has a four-tap configuration, the image sensor 22 may preferably be configured as a multi-tap (multiple taps), and is not restricted to a four-tap configuration. The image sensor 22 may be configured as, for example, a three-tap image sensor.

<<<About the image sensor 22>>>

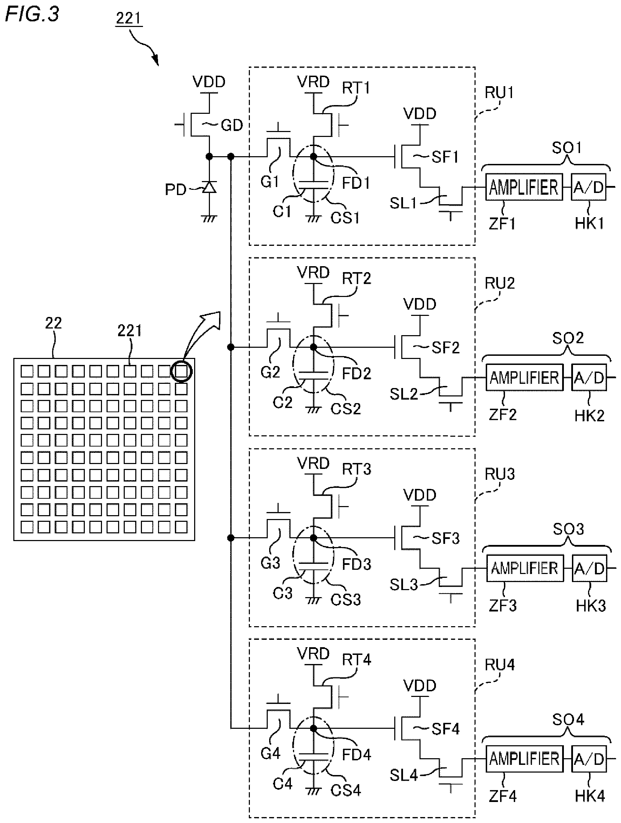

Fig. 3 is a diagram showing an example of the configuration of the image sensor 22. As shown in Fig. 3, the image sensor 22 includes multiple pixels 221 arranged in a two-dimensional manner (e.g., 640×480). In each pixel 221, a single light-receiving element PD and multiple (four in this case) signal reading units RU1 through RU4 that correspond to the single light-receiving element PD are provided. Furthermore, signal output units SO1 through SO4 are provided for the signal read-out units RU1 through RU4, respectively. It should be noted that the signal read-out units RU1 through RU4 have the same configuration, and only the numerals of the components differ. Also, the signal output units SO1 through SO4 have the same configuration. In the following description, description will be made regarding the signal reading unit and the signal output unit mainly using the signal reading unit RU1 and the signal output unit SO1.

The light-receiving element PD is an element (e.g., a photodiode) that generates charge according to an exposure amount.

The signal read-out unit RU1 includes an accumulation portion CS1, a transistor G1, a reset transistor RT1, a source follower transistor SF1, and a selection transistor SL1.

The accumulation portion CS1 is a portion that accumulates the charge generated by the light-receiving element PD, and is configured with an accumulation capacity C1 and a floating diffusion FD1.

The transistor G1 is provided between the light-receiving element PD and the accumulation portion CS1. Then, the transistor G1 is turned on in a predetermined exposure period (e.g., exposure period 1 described later) based on an instruction from the timing controller 32 of the controller 30, so as to supply the charge generated by the light-receiving element PD to the accumulation portion CS1. Similarly, the transistors G2 through G4 supply the charge generated by the light-receiving element PD to the accumulation portions CS2 through CS4 based on an instruction from the timing controller 32. That is to say, the transistors G1 through G4 distribute the charge generated by the light-receiving element PD to the accumulation portions CS1 through CS4 according to the exposure period.

It should be noted that, each accumulation unit repeatedly accumulates charge according to the number of repetitions n. The charge accumulated in each accumulation portion corresponds to the exposure amount exposed by the light-receiving element PD in each exposure period.

When the selection transistor SL1 of the signal read-out unit RU1 is selected, the signal output unit SO1 outputs a signal value that corresponds to the charge accumulated in the accumulation portion CS1. As shown in Fig. 3, the signal output unit SO1 includes an amplifier circuit ZF1 configured to amplify the output of the signal read-out unit RU1, and an A/D conversion circuit HK1 configured to convert an output (an analog signal) of the amplifier circuit ZF1 into a digital signal. Then, the signal output unit SO1 converts the charge (exposure amount in the exposure period) accumulated in the accumulation unit CS1 into a signal value (digital signal) that corresponds to the charge, and outputs the signal value (digital signal) to the image acquisition unit 34 of the controller 30. The signal value (digital signal) based on the charge accumulated in the accumulation portion CS1 becomes a signal value that corresponds to the exposure amount in the exposure period.

With the use of the image sensor 22 as described above, this arrangement is capable of measuring four regions in one image capture. That is to say, the measurement apparatus 1 is capable of acquiring four range images in one image capture. The number of range images acquired in a single image capture (i.e., four images in this example) will sometimes be referred to as "sub-frames". Also, multiple regions (four regions in this example) measured in one image capture will sometimes be referred to as "zones".

<<<Image Acquisition>>>

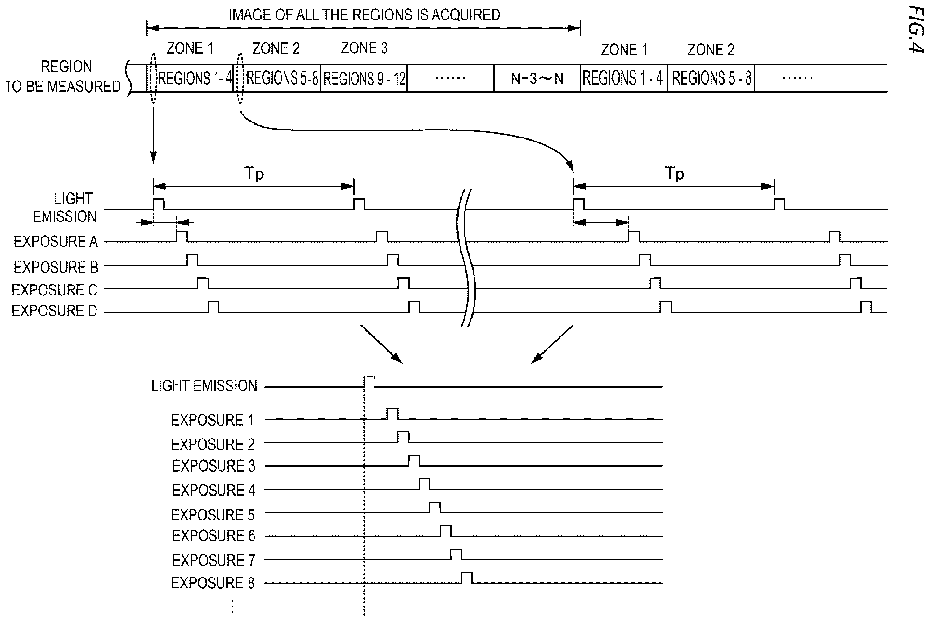

Fig. 4 is an explanatory diagram showing image acquisition. Fig. 6 shows the timing at which the images of the regions 1 through 8 from among the multiple regions 1 through N are acquired. Of the diagrams showing the timing shown in Fig. 4, the left side of the upper diagram of Fig. 4 shows the timing at which the images of the zones 1 (regions 1 through 4) are acquired, and the right side shows the timing at which the images of the zones 2 (regions 5 through 8) are acquired.

The regions 1 through 4 and the regions 5 through 8 have different delay times for the exposure timing with respect to the light emission timing. Specifically, the regions 5 through 8 have an exposure timing that is slower than that of the regions 1 through 4 (i.e., the exposure timing that corresponds to the Tdelay shown in Fig. 1B) with respect to the light emission timing.

The lower diagram of Fig. 4 is an explanatory diagram showing the exposure timings of the regions 1 through 8 with the light emission pulses as a reference. Originally, as shown in the upper diagram in Fig. 4, the light emission of the regions 1 through 4 and the light emission of the regions 5 through 8 are separate from each other. However, in the lower diagram in Fig. 4, the exposure timings of the regions 1 through 8 are shown with the light emission timing of the light source as a reference.

As described above, the light emission timings are separate for the region 4 and the region 5. However, the exposure periods of the region 4 and the region 5 are consecutive with the light emission pulse as a reference. As described above, the consecutive exposure periods are not restricted to those in which the light emission timings are configured as the same exposure period (e.g., an exposure period that corresponds to the regions 1 through 4). Also, the consecutive exposure periods may include exposure periods in which the light emission timings are different (e.g., exposure periods that correspond to the regions 4 and 5).

First, the controller 30 (the timing controller 32) controls the light emitting unit 10 to emit light with a period Tp, and also controls the exposure timing of the image capture unit 20 according to the light emission timing. Then, the image acquisition unit 34 acquires an image (image data) captured by the image capture unit 20 at each exposure timing.

First, images of the regions 1 through 4 are acquired. That is to say, the timing controller 32 instructs the image sensor 22 of the image capture unit 20 to perform exposure for each pixel of an image in the exposure periods 1 through 4 (see Fig. 4) delayed from the light emission timing.

The timing controller 32 repeatedly performs exposure for each period Tp, so as to cause the accumulation portions CS1 through CS4 to accumulate charge.

The image acquisition unit 34 acquires a signal value that corresponds to the charge accumulated in the accumulation portions CS1 through CS4 via the signal output units SO1 through SO4. Then, the control unit 30 writes the image data of the range images (sub-frames) of the regions 1 through 4 thus acquired into the image memory.

Next, in the same manner, the controller 30 acquires images for the regions 5 through 8. Then, the control unit 30 writes the image data of the range images (sub-frames) of the regions 5 through 8 into the image memory of the image acquisition unit 34.

As shown in Fig. 4, the delay time (delay time between the exposures A through D) with respect to the light emission timing in the regions 5 through 8 is set to be longer than in the case of the regions 1 through 4. Furthermore, as described above, the setting is made such that as the region to be measured becomes farther, the number of repetitions (the number of times the charge is accumulated) becomes larger.

With the above operations to the region N, an image up to the region N (an image of all the regions) is acquired.

<<<Correction>>>

<<Comparative Example>>

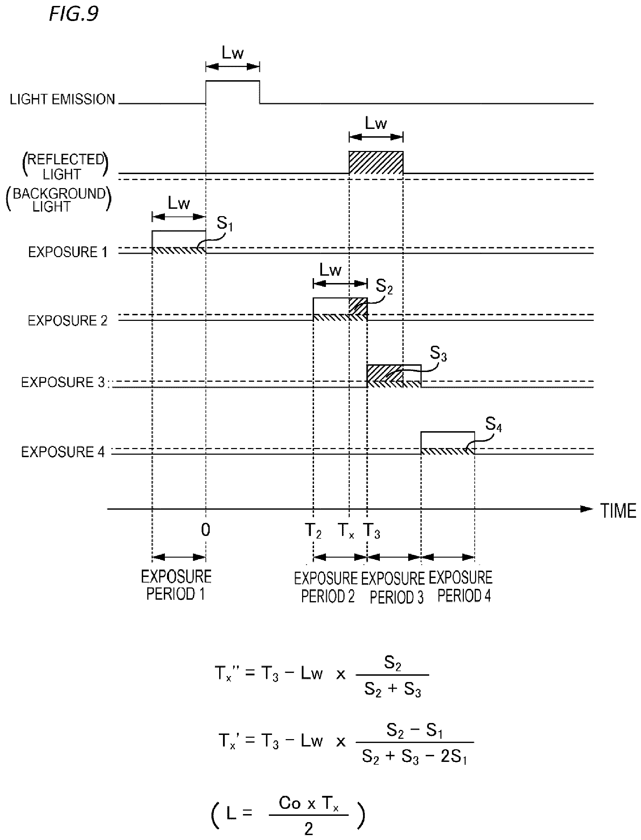

Fig. 9 is an explanatory diagram for explaining the relation between light emission and exposure in the comparative example. In FIG. 9, the pulse width of the light emission pulse is Lw. Also, the pulse width of the reflected light is represented by Lw. In the comparative example, the exposures 1 through 4 are set.

In the exposure 1, an exposure period (which is referred to as an exposure period 1) is set before light emission of the light emission pulse. This is for exposing the background light and preventing the reflected light from being exposed. It should be noted that the exposure period is a period in which the exposure level in FIG is a high level (H level). The width (exposure width) of the exposure period 1 of the exposure 1 is equal to the pulse width Lw of the light emission pulse. The signal value $S_1$ in the exposure period 1 is a signal value that corresponds to the charge accumulated in the accumulation portion CS1 according to the exposure amount in the exposure period 1. In this example, the signal value $S_1$ is a signal value that corresponds to the exposure amount of the background light.

As the exposure 2, an exposure period 2 that corresponds to the region 1 is set. The delay time of the exposure 2 with respect to the light emission start (time 0) of the light emission pulse is a delay time $T_2$ (corresponding to the Tdelay shown in Fig. 1B). Furthermore, the width of the exposure period 2 of the exposure 2 is Lw. The signal value $S_2$ in the exposure period 2 is a signal value that corresponds to the charge accumulated in the accumulation portion CS2 according to the exposure amount in the exposure period 2. In this example, the signal value $S_2$ is a signal value that corresponds to the exposure amount of the background light and the reflected light.

As the exposure 3, an exposure period 3 that corresponds to the region 2 is set. The delay time of the exposure 3 with respect to the light emission start (time 0) of the light emission pulse is a delay time $T_3$ (corresponding to the T delay shown in Fig. 1B: $T_3 = T_2 + Lw$). Also, the width of the exposure period 3 of the exposure 3 is also Lw. The signal value $S_3$ in the exposure period 3 is a signal value that corresponds to the charge accumulated in the accumulation portion CS3 according to the exposure amount in the exposure period 3. In this example, the signal value $S_3$ is a signal value that corresponds to the exposure amount of the background light and the reflected light.

As the exposure 4, an exposure period 4 that corresponds to the region 3 is set. The delay time $T_4$ of the exposure 4 with respect to the light emission start (time 0) of the light emission pulse is represented by $T_3 + Lw$ ($T_4 = T_3 + Lw$). Also, the width of the exposure period 4 of the exposure 4 is also Lw. The signal value $S_4$ in the exposure period 4 is a signal value that corresponds to the charge accumulated in the accumulation portion CS4 according to the exposure amount in the exposure period 4. In this example, the signal value $S_4$ is a signal value that corresponds to the exposure amount of the background light.

Here, assuming that the time of flight of the light (which will also be referred to as the arrival time hereafter) without considering the effect of the background light is Tx″, the arrival time Tx″ is calculated as follows:

$$Tx'' = T_3 - Lw \times S_2 / (S_2 + S_3)\ (1).$$

However, with the method for calculating Tx″ (Expression (1)), due to the influence of the background light, the arrival time of the light cannot be calculated with high precision.

Furthermore, considering the effect of the background light, assuming that the light arrival time is Tx', the arrival time Tx' is calculated as follows: $Tx' = T_3 - Lw \times (S_2 - S_1)/(S_2 + S_3 - 2S_1)$ (2).

It should be noted that, assuming that the distance to the object is L, the distance L to the object is calculated based on the arrival time (in this example, the arrival time Tx'). That is to say, since the light travels by a distance that is twice the distance L during the arrival time Tx', assuming that the speed of the light is Co,

$$L = (Co \times Tx') / 2 \ldots \quad (3).$$

As described above, with the comparative example shown in Fig. 9, the influence of the background light can be removed. However, in the comparative example, the exposure period of exposure 1 is provided only for the detection of background light. Accordingly, the region cannot be measured in the exposure period of exposure 1. Accordingly, in the comparative example, a measurable region is reduced for a single light emission. This makes it difficult to improve the frame rate (FPS).

<<Present Embodiment>>

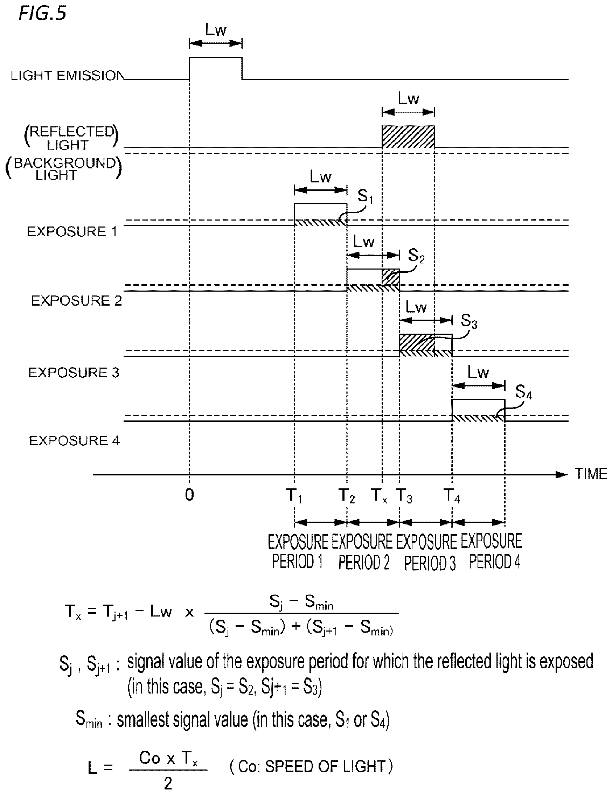

Fig. 5 is an explanatory diagram showing the relation between light emission and exposure according to the first embodiment. Also in the present embodiment, the pulse width of the light emission pulse (and the pulse of the reflected light) is represented by Lw. For each light emission, the exposures 1 through 4 (and the exposure periods 1 through 4) are set. The widths (exposure widths) of the exposure periods 1 through 4 are the same as those of the light emission pulse Lw. Also, the H/L levels of the exposures 1 through 4 indicate the on-off state of the transistors G1 through G4 shown in Fig. 3. For example, the transistor G1 is turned on in the H-level exposure period 1 of the exposure 1, and the charge generated in the light-receiving element PD is accumulated in the storage capacitor C1 of the accumulation portion CS1. Description will be made below regarding a case in which the reflected light is exposed in the exposure period 2 and the exposure period 3 (the reflected light may reach a period different from the exposure period 2 or the exposure period 3. For example, the reflected light may be exposed in the exposure period 1 and the exposure period 2).

In the exposure 1, a region (region 1) defined by the delay time $T_1$ with respect to the start of light emission of the light emission pulse and the exposure width Lw is measured. That is to say, unlike the comparative example (Fig. 9), also in the exposure 1, measurement of a predetermined region (region 1) is executed. This increases the number of regions that can be measured for a single light emission as compared with the comparative example. This allows the frame rate (FPS) to be improved as compared with the comparative example. It should be noted that as described above, in the present embodiment, the reflected light is exposed in the exposure period 2 and the exposure period 3. Accordingly, the signal value $S_1$ in the exposure period 1 is a signal value that corresponds to the exposure amount of the background light (however, when the reflected light is exposed in the exposure period 1 and the exposure period 2, the signal value $S_1$ is a signal value that corresponds to the exposure amount of the background light and the reflected light).

The exposures 2 through 4 are the same as in the comparative example. The width of each exposure period is Lw. However, the regions to be measured for each exposure are different from those in the comparative example.

In addition, an exposure period 2 that corresponds to the next region (region 2) of the region 1 is set to the exposure 2. The signal value $S_2$ during the exposure period 2 is a signal value that corresponds to the exposure amount of the background light and the reflected light. Furthermore, the exposure 3 includes an exposure period 3 that corresponds to the next region (region 3) of the region 2. The signal value $S_3$ during the exposure period 3 is a signal value that corresponds to the exposure amount of the background light and the reflected light. In addition, an exposure period 4 that corresponds to the next region (region 4) of the region 3 is set to the exposure 4. The signal value $S_4$ during the exposure period 4 is a signal value that corresponds to the exposure amount of the background light. It should be noted that the signal values $S_1$ through $S_4$ correspond to the values (pixel data) of the pixels constituting the image data (range image) of the regions 1 through 4, respectively.

It should be noted that, in Fig. 5, for description, the description has been made based on the charge generated in a single exposure. However, in actuality, the signal values $S_i$ (in this case, $S_1$ through $S_4$) have a signal value that corresponds to the charge (corresponding to the amount of exposure) accumulated by repeatedly performing the exposure a number of repetitions n. The pixel 221 of the image sensor 22 outputs the signal values $S_1$ through $S_4$ that correspond to the charges accumulated in the accumulation portions CS1 through CS4. The image acquisition unit 34 (signal acquisition unit) of the controller 30 acquires the signal values $S_1$ through $S_4$ (signal values that correspond to the charges of the accumulation portions CS1 through CS4) of the respective pixels 221 from the image sensor 22, respectively.

The correction unit 35 of the controller 30 identifies the smallest signal value that indicates the smallest exposure amount from among the signal values $S_1$ through $S_4$. Then, the identified signal value is represented by the smallest signal value $S_{min}$. In this example, the signal value $S_1$ or the signal value $S_4$ becomes the smallest signal value $S_{min}$.

Next, the correction unit 35 corrects the signal values $S_1$ through $S_4$ based on the minimal signal value $S_{min}$. Specifically, the correction unit 35 corrects the signal values that correspond to the exposure amounts for the respective exposure periods by subtracting the minimum signal values $S_{min}$ from the signal values $S_1$ through $S_4$, respectively. The smallest signal value $S_{min}$ is subtracted from the signal values $S_1$ through $S_4$, thereby allowing the effect of the background light included in the signal values $S_1$ through $S_4$ to be corrected.

It should be noted that the image acquiring unit 34 acquires the corrected signal-values $S_1$ through $S_4$ for the respective pixels. This allows images of four regions (e.g., regions 1 through 4) to be acquired with no effect of background light.

It should be noted that the time calculation unit 36 calculates the arrival time Tx of the reflected light based on the corrected signal value. Specifically, first, the time calculation unit 36 identifies the signal value S obtained by exposing the reflected light from among the signal values $S_1$ through $S_4$ (or signal values $S_1$ through $S_4$ that have been corrected). For example, the time calculation unit 36 identifies a signal that corresponds to two consecutive exposure periods and has the highest exposure amount. For example, assuming that the signal value that corresponds to the exposure period j in which the exposure of the reflected light is started is $S_j$, the two signal values $S_j$ and $S_{j+1}$ are identified. In this example, the signal values $S_2$ and $S_3$ correspond to the signal values $S_i$ and $S_{i+1}$ obtained by exposing the reflected light. Then, the time calculation unit 36 calculates the arrival time Tx using the following Expression (4) with the signal values $(S_j - S_{min})$ and $(S_{j+1} - S_{min})$ corrected based on the minimum signal value Smin.

$$T_x = T_{j+1} - Lw \times \frac{S_j - S_{min}}{(S_j - S_{min}) + (S_{j+1} - S_{min})} \quad \cdots\cdots\cdots (4)$$

Furthermore, the distance calculation unit 38 calculates the distance L according to Expression (5) based on the corrected signal value.

$$L = \frac{Co \times T_x}{2} \quad \cdots\cdots\cdots (5)$$

This allows the arrival time Tx and the distance L in which the influence of the background light is removed to be calculated, thereby allowing the precision to be improved. Furthermore, with the present embodiment, as compared with the comparative example, there are many regions that can be measured for a single light emission. This allows the FPS to be improved.

= Second Embodiment =

In the second embodiment, correction is executed giving consideration to [Gain Variation] and [Parasitic Sensitivity] for each accumulation portion CS of the image sensor 22 (e.g., for each tap of a multi-tap CMOS image sensor constituting the image sensor 22). This allows more accurate correction to be executed. It should be noted that, the measurement apparatus 1 has the same configuration as in the first embodiment. However, the correction unit 35 has different functions. The correction unit 35 of the second embodiment has correction values such as a gain $G_i$, a $G_{p_i}$, a first correction value $\alpha_i$, a second correction value $\beta_i$, and the like, which will be described later, corresponding to the respective accumulation portions CSi (here, CS1 through CS4) of the image sensor 22.

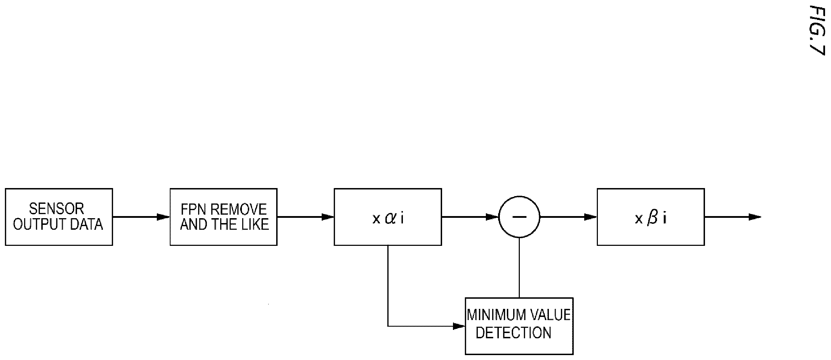

Fig. 6 is an explanatory diagram showing the relation between light emission and exposure according to the second embodiment. Fig. 7 is an explanatory diagram showing the correction processing according to the second embodiment.

Assuming that the signal value acquired by the image sensor 22 is represented by S, the intensity of the light is represented by P, the gain (the ratio of the signal value (output) to the amount of charge (input)) of the image sensor 22 is represented by G, and the exposure time (the time when the light is exposed) is represented by T, the following relation holds true: $S = P \times G \times T$. The components of P, G, and T can be decomposed as follows.

Description will be made with the intensity of the background light as a $P_b$ and the intensity of the reflected light as a $P_s$ from among the light intensities P.

Out of the gains G of the image sensor 22, the gains of the four accumulation portions CS1 through CS4 in the exposure period are represented by $G_1$ through $G_4$, and the gains of the four accumulation portions CS1 through CS4 in the non-exposure period are represented by $G_{p1}$ through $G_{p4}$. The gain $G_i$ represents a value that corresponds to the ratio of the signal value (output) to the amount of charge (input) during the exposure. It should be noted that the gain $G_i$ corresponds to [Gain Correction]. The gain $G_{pi}$ represents a value that corresponds to the ratio of the signal value (output) to the amount of charge (input) during the non-exposure period. It should be noted that the gain $G_{pi}$ corresponds to [parasitic correction-value]. The gain $G_i$ and the gain $G_{pi}$ are known values measured in advance (The measurement methods will be described later.).

In the exposure time T, the width of the exposure period is represented by $T_{on}$, and the width of the non-exposure period is represented by $T_{o}ff$. The Ton corresponds to the width Lw of the exposure period. The Toff corresponds to Tp-Lw (see Fig. 2 for Tp).

Also, in the present embodiment, description will be made assuming that the reflected light is exposed in the exposure period 2 and the exposure period 3.

The signal values $S_1$ through $S_4$ when there is no reflected light are as shown in the following Expressions (6-1) through (6-4).

$$S_1=P_b\times(G_1\times T_{on}+G_{p1}\times T_{off})\ (6\text{-}1)$$

$$S_2=P_b\times(G_2\times T_{on}+G_{p2}\times T_{off})\ (6\text{-}2)$$

$$S_3=P_b\times(G_3\times T_{on}+G_{p3}\times T_{off})\ (6\text{-}3)$$

$$S_4=P_b\times(G_4\times T_{on}+G_{p4}\times T_{off})\ (6\text{-}4)$$

As shown in Fig. 6, when the reflected light is exposed over the exposure period 2 and the exposure period 3, the signal values $S_1$ through $S_4$ are as shown in the following Expressions (7-1) through (7-4).

$$S_1=P_b\times(G_1\times T_{on}+G_{p1}\times T_{off})\ (7\text{-}1)$$

$$S_2=P_b\times(G_2\times T_{on}+G_{p2}\times T_{off})+Q_{s1}\times G_2\ (7\text{-}2)$$

$$S_3=P_b\times(G_3\times T_{on}+G_{p3}\times T_{off})+Q_{s2}\times G_3\ (7\text{-}3)$$

$$S_4=P_b\times(G_4\times T_{on}+G_{p4}\times T_{off})\ (7\text{-}4)$$

Here, $Q_s$ represents the amount of light, and is the product of the intensity $P_s$ of the reflected light and the exposure time t of the reflected light ($P_s \times t$). It should be noted that the exposure time t of the reflected light is the time obtained by exposing the reflected light from the exposure period (e.g., $T_3$ - $T_x$ for the exposure period 2 shown in Fig. 6).
The correction unit 35 calculates a first correction value $\alpha_i = 1/(G_i \times T_{on} + G_{pi} \times T_{off})$ that corresponds to the signal value $S_i$ when there is no reflected light, corresponding to the respective accumulation portions CS1 through CS4. That is to say, the correction unit 35 calculates the first correction value $\alpha_i$ based on the gain G; (which corresponds to the gain correction value) acquired in advance, the gain $G_{pi}$ (which corresponds to the parasitic correction value), and the Tp (see Fig. 1B) defining exposure timing and Lw (which corresponds to the $T_{on}$). It should be noted that, instead of calculating the first correction value $\alpha_i$, the correction unit 35 may use a first correction value $\alpha_i$ stored in advance.
Next, the correction unit 35 corrects the signal value $S_i$ based on the first correction value $\alpha_i$. Specifically, the correction unit 35 multiplies the signal value $S_i$ by the first correction value $\alpha_i$. It should be noted that, when the signal value $S_i$ is multiplied by the first correction value $\alpha_i$, the corrected signal value ($S_i \times \alpha_i$) is as shown in the following Expressions (8-1) through (8-4).

$$S_1\times\alpha_1=P_b\ (8\text{-}1)$$

$$S_2\times\alpha_2=P_b+Q_{s1}\times G_2\times\alpha_2\ (8\text{-}2)$$

$$S_3\times\alpha_3=P_b+Q_{s2}\times G_3\times\alpha_3\ (8\text{-}3)$$

$$S_4\times\alpha_4=P_b\ (8\text{-}4)$$

The correction unit 35 identifies the smallest signal value $S_{min}$ that indicates the smallest exposure amount from among the corrected signal values represented by the Expressions (8-1) through (8-4). In this example, the signal values of the exposure period 1 and the exposure period 4 that do not expose the reflected light are minimized. However, accurately, due to noises or the like, the Expression of the $S_{min} = S_1 \times \alpha_1 = S_4 \times \alpha_4$ does not hold. In order to actually calculate the minimum signal value $S_{min}$, a minimum signal value (i.e., the minimum value from among the $S_1 \times \alpha_1$ and the $S_4 \times \alpha_4$) or an average value of signal values other than signals having the maximum value and the next maximum value (i.e., the $S_1 \times \alpha_1$ and the $S_4 \times \alpha_4$) is used as the $S_{min}$. That is to say, $S_{min} = (S_1 \times \alpha_1 + S_4 \times \alpha_4)/2 = P_b$.
The correction unit 35 corrects the corrected signal value ($S_i \times \alpha_i$) based on the minimal signal value $S_{min}$. Specifically, the correction unit 35 further corrects the signal value corrected by the first correction value $\alpha_i$ by subtracting

the minimum signal value $S_{min}$ from the signal value ($S_i \times \alpha_i$) corrected by the first correction value $\alpha_i$. It should be noted that, when the signal value ($S_i \times \alpha i$) corrected by the first correction value $\alpha i$ is further corrected based on the minimal signal value $S_{min}$, the corrected signal value is as shown in the following Expressions (9-1) through (9-4).

$$S_1 \times \alpha_1 - S_{min} = 0 \ (9\text{-}1)$$

$$S_2 \times \alpha_2 - S_{min} = Q_{s1} \times G_2 \times \alpha_2 \ (9\text{-}2)$$

$$S_3 \times \alpha_3 - S_{min} = Q_{s2} \times G_3 \times \alpha_3 \ (9\text{-}3)$$

$$S_4 \times \alpha_4 - S_{min} = 0 \ (9\text{-}4)$$

As shown in Expressions (9-1) through (9-4), the signal value is corrected based on the smallest signal value $S_{min}$, thereby allowing the effect of the background light ($P_b$) included in the signal value to be corrected.

Furthermore, the correction unit 35 calculates the second correction value $\beta_i = 1/(\alpha_i \times G_i)$ for correcting the gain variation based on the first correction value $\alpha i$ described above and the gain $G_i$ (gain correction value) acquired in advance. It should be noted that, instead of calculating the second correction value $\beta_i$, the correction unit 35 may use a second correction value $\beta_i$ stored in advance.

Finally, the correction unit 35 corrects the signal values (see Expressions (9-1) through (9-4)) corrected based on the first correction value $\alpha_i$ and the minimum signal value $S_{min}$, based on the second correction value $\beta_i$. Specifically, the correction unit 35 multiplies the signal values (see Expressions (9-1) through (9-4)) corrected based on the first correction value $\alpha_i$ and the minimum signal value $S_{min}$ by the second correction value $\beta i$. It should be noted that the corrected signal values based on the second correction value $\beta i$ are as shown in the following Expressions (10-1) through (10-4).

$$(S1 \times \alpha1 - Smin) \times \beta1 = 0 \ (10\text{-}1)$$

$$(S2 \times \alpha2 - Smin) \times \beta2 = Qs1 \ (10\text{-}2)$$

$$(S3 \times \alpha3 - Smin) \times \beta3 = Qs2 \ (10\text{-}3)$$

$$(S4 \times \alpha4 - Smin) \times \beta1 = 0 \ (10\text{-}4)$$

As shown in Expressions (10-1) through (10-4), the signal values are corrected based on the second correction values $\beta i$, thereby allowing the influence of the gain variation and the parasitic sensitivity for each accumulation portion CS included in the signal value to be corrected. As described above, with the second embodiment, variations in the gain for each accumulation portion CS and the influence of the parasitic sensitivity can be suppressed.

It should be noted that, also in the second embodiment, the time calculation unit 36 is capable of calculating the arrival time Tx of the reflected light based on the corrected signal value. Assuming that the corrected signal values represented by the Expressions (10-1) through (10-4) are $S_1'$ through $S_4'$, the time calculation unit 36 identifies the signal value obtained by exposing the reflected light from among the signal values $S_1'$ through $S_4'$. In this example, the signal values $S_2'$ and $S_3'$ correspond to the signal values obtained by exposing the reflected light. The time calculation unit 36 calculates the arrival time Tx using the corrected signal values $S_2'$ ($=Q_{s1}$) and $S_3'$ ($=Q_{s2}$) according to the following Expression (11).

$$Tx = T_3 - Lw \times S_2'/(S_2' + S_3') \ (11)$$

Similarly, also in the second embodiment, the distance calculation unit 38 is capable of calculating the distance L according to the Expression (5) based on the corrected signal value. With the second embodiment, this is capable of suppressing the influence of background light, suppressing the variation of the gain for each accumulation portion CS, and the influence of the parasitic sensitivity, thereby allowing the arrival time Tx and the distance L to be calculated with high precision. Also, also in the second embodiment, as compared with the comparative example, a large number of regions can be measured for a single light emission. This allows the FPS to be improved.

<MODIFICATION>

Also, the number of the exposure periods (the number of times the charge is accumulated) may be different for each tap (i.e., for each of the accumulation portions CS1 through CS4). In this case, the image acquiring unit 34 acquires the signal values that correspond to the charges of the accumulation portion $CS_i$ accumulated in the multiple exposure periods, respectively.

A correction unit 35 according to a modification calculates the first correction value $\alpha_i$ according to the following Expression (12) based on the number of the exposure periods n; of the accumulation portion $CS_i$.

$$\alpha_i = 1/\{n_i \times (G_i \times T_{on} + G_p \times T_{off})\} \ (12)$$

The correction using the first correction value $\alpha_i$ is the same as in the second embodiment.

This suppresses the influence of a difference in the number of the exposure periods (i.e., the number of times the charge is accumulated) for each tap.

<Regarding a method of acquiring the correction value>

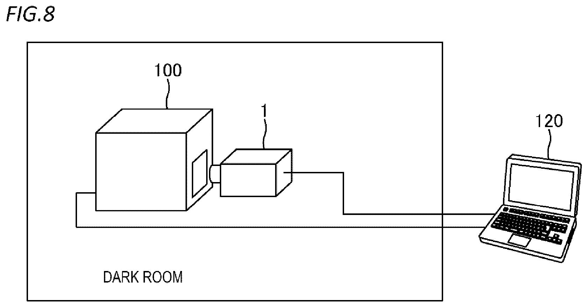

Fig. 8 is a diagram showing an example of a method for acquiring correction values. Description will be made below regarding methods for acquiring the gain G; and the gain $G_{pi}$.

Prior to shipment of the measurement apparatus 1 from the factory, as shown in Fig. 8, the brightness box 100 with a predetermined illuminance houses the image sensor 22 of the measurement apparatus 1. Then, a control computer 120 measures the sensitivity of each tap (for each charge accumulation portion CS) to be emitted with the defined illuminance. The brightness box 100 emits the measurement apparatus 1 (or the image sensor 22) with light having a uniform predetermined illuminance.

First, the control computer 120 sets the total period $T_{off}$ (Ton = 0; see Expressions (6-1) through (6-4)) without providing an exposure period, so as to obtain the $S_i$ of the respective accumulation portions CSi. Here, in the Expressions (6-1) through (6-4) in which there is no reflected light, the strengths $P_b$ and $T_{off}$ are known values, and the $T_{on}$ is 0. Accordingly, the control computer 120 is capable of calculating the gain $G_{pi}$ (parasitic correction value) based on the signal value $S_i$ acquired in this case.

After the gain $G_{pi}$ (parasitic correction value) is acquired, the control computer 120 provides a predetermined exposure period. The control computer 120 acquires the signal value $S_i$ of the respective accumulation portions $CS_i$. Similarly to Expressions (7-1) through (7-4), the signal values $S_i$ acquired in this case are as shown in the following Expression (13).

$$S_i = P_b \times (G_i \times T_{on} + G_{pi} \times T_{off}) + (P_s \times t) \times G_i \ (13)$$

Here, the intensity $P_b$ and the $P_s$ in Expression (13) are known values because the brightness box 100 emits with light having a defined illuminance. The exposure period $T_{on}$ and the non-exposure period $T_{off}$ are also known values. The time t at which the light receiving element PD exposes light is a known value for the t = $T_{on}$. Furthermore, the gain $G_{pi}$ (parasitic correction value) has already been acquired. Accordingly, the control computer 120 is capable of calculating the gain G; (gain correction value) based on the signal value $S_i$ acquired in this case.

In this manner, the control computer 120 acquires the gain G; (gain correction value) and the gain $G_{pi}$ (parasitic correction value) for each tap (for each accumulation portion CS) of the respective pixel for each pixel of the image sensor 22. Then, the control computer 120 stores the gain $G_i$ (gain correction value) and the gain $G_{pi}$ (parasitic correction value) in the correction unit 35 of the controller 30 of the measuring device 1 in association with the accumulation portion CS of each pixel of the image sensor 22. This allows the correction unit to correct the signal-value $S_i$ according to the second embodiment described above.

= Summary =

The measurement apparatus 1 of the present embodiment has been described above. The measurement apparatus 1 includes an image sensor 22 (sensor), an image acquisition unit 34 (signal acquisition unit), and a correction unit 35. The image sensor 22 includes a light-receiving element PD configured to generate charge that corresponds to an exposure amount, and accumulation portions CS1 through CS4 configured to accumulate the charge distributed according to the exposure period. Furthermore, the image-acquiring unit 34 acquires the signal-values $S_1$ through $S_4$ that correspond to the charges generated by the accumulation portions CS1 through CS4, respectively. The correction unit 35 identifies the minimum signal value $S_{min}$ that indicates the smallest exposure amount from among the signal values $S_1$

through $S_4$, and corrects the signal values $S_1$ through $S_4$ based on the minimum signal value $S_{min}$. This allows the frame rate (FPS) to be improved as compared with the comparative example while suppressing the influence of the background light.

Furthermore, in the second embodiment, the correction unit 35 has a first correction value $\alpha_i$ that corresponds to the signal value $S_i$ when there is no reflected light corresponding to each of the accumulation portions CS1 through CS4. Then, the correction unit 35 corrects the signal values $S_i$ corrected by the first correction value $\alpha_i$ based on the minimum signal value $S_{min}$ corrected by the first correction value $\alpha_i$ (see Expressions (9-1) through (9-4)). This provides an improved frame rate (FPS) while suppressing the influence of background light.

Furthermore, the correction unit 35 has a gain $G_{pi}$ that corresponds to the signal-value $S_i$ when no exposure period is provided (i.e., when the $T_{on}$ is 0) corresponding to each of the accumulation portions CS1 through CS4. The gain $G_{pi}$ corresponds to a correction value for correcting the parasitic sensitivity. The correction unit 35 calculates the first correction value $\alpha_i$ based on the gain $G_{pi}$. This allows the influence of the parasitic sensitivity to be corrected.

Furthermore, the correction unit 35 includes a second correction value $\beta_i$ for correcting variations in the gain of the signal value $S_i$, corresponding to the respective accumulation portions CS1 through CS4. Then, the correction unit 35 corrects the signal value $S_i$ corrected based on the minimum signal value $S_{min}$, based on the second correction value $\beta_i$ (see Expressions (10-1) through (10-4)). This suppresses variation in gain for each tap.

Furthermore, the correction unit 35 calculates the second correction value $\beta_i$ based on the first correction value $\alpha_i$ and the gain $G_i$. This allows suppression of the influence of variations in gain or variations in parasitic sensitivity.

Furthermore, the image acquiring unit 34 acquires the signal values $S_1$ through $S_4$ that correspond to the charges of the accumulation portions CS1 through CS4 accumulated in the multiple exposure periods. The correction unit 35 calculates the first correction value $\alpha_i$ based on the number of the exposure periods n; of the accumulation portion CSi (see Expression (12)). With this, even when the number of the exposure periods (the number of times the charge is accumulated) differs for each accumulation portion CS, the appropriate first correction value $\alpha_i$ can be calculated for each accumulation portion CS. Accordingly, this allows the signal values that correspond to the respective accumulation portions CS to be appropriately corrected.

Furthermore, the measurement apparatus 1 further includes a distance calculation unit 38 configured to calculate the distance to the object based on the corrected signal value generated by the correction unit 35. This provides improved distance precision. Furthermore, by calculating the distance for each pixel, this allows the distance image to be acquired.

The above embodiments are provided for the purpose of facilitating understanding of the present invention, and are not intended to restrict the present invention. Needless to say, the present invention can be modified or improved without departing from the gist thereof. It goes without saying that the present invention includes equivalents thereof.

As described above, the present specification discloses the following matters.

(1) A measurement apparatus comprising:

a sensor including a light-receiving element configured to generate charge according to an exposure amount; and
a plurality of accumulation portions configured to accumulate the charge distributed according to an exposure period;
a signal acquisition unit configured to acquire signal values corresponding to the charge in the plurality of accumulation portions, respectively; and
a correction unit configured to identify a minimum signal value that indicates the smallest exposure amount from among the plurality of signal values, and to correct the signal value based on the minimum signal value.

(2) The measurement apparatus according to (1), wherein the correction unit has a first correction value that corresponds to the signal value when there is no reflected light corresponding to each of the accumulation portions, and the correction unit corrects the signal value corrected by the first correction value based on the minimum signal value corrected by the first correction value.

(3) The measurement apparatus according to claim 2, wherein the correction unit has a parasitic correction value that corresponds to the signal value in a case in which no exposure period is provided corresponding to each of the accumulation portions, and the correction unit calculates the first correction value based on the parasitic correction value.

(4) The measurement apparatus according to (2) or (3), wherein the correction unit has a second correction value for correcting variation of the gain of the signal value corresponding to each of the accumulation portions, and the correction unit corrects the signal value corrected based on the minimum signal value based on the second correction value.

(5) The measurement apparatus according to claim 4, wherein the correction unit calculates the second correction value based on the first correction value and a gain correction value that corresponds to the gain.

(6) The measurement apparatus according to any one of (2) to (5), wherein the signal acquisition unit acquires a signal value that corresponds to the charge of the accumulation portion accumulated in the multiple exposure periods, and the correction unit calculates the first correction value based on the number of the exposure periods.

(7) The measurement apparatus according to any one of (1) to (6), further comprising: a calculation unit configured to calculate a distance to an object based on the corrected signal value.

The present application is based on Japanese Patent Application No. 2022-007779, filed on January 21, 2022, the contents of which are incorporated herein by reference.

**Claims**

1. A measurement apparatus comprising:

   a sensor including a light-receiving element configured to generate charge according to an exposure amount, and a plurality of accumulation portions configured to accumulate the charge distributed according to an exposure period;
   a signal acquisition unit configured to acquire signal values corresponding to the charge in the plurality of accumulation portions, respectively; and
   a correction unit configured to identify a minimum signal value that indicates the smallest exposure amount from among the plurality of signal values, and to correct the signal value based on the minimum signal value.

2. The measurement apparatus according to claim 1, wherein the correction unit has a first correction value that corresponds to the signal value when there is no reflected light corresponding to each of the accumulation portions, and the correction unit corrects the signal value corrected by the first correction value based on the minimum signal value corrected by the first correction value.

3. The measurement apparatus according to claim 2, wherein the correction unit has a parasitic correction value that corresponds to the signal value when no exposure period is provided corresponding to each of the accumulation portions, and the correction unit calculates the first correction value based on the parasitic correction value.

4. The measurement apparatus according to claim 2 or 3, wherein the correction unit has a second correction value for correcting variation of the gain of the signal value corresponding to each of the accumulation portions, and the correction unit corrects the signal value corrected based on the minimum signal value based on the second correction value.

5. The measurement apparatus according to claim 4, wherein the correction unit calculates the second correction value based on the first correction value and a gain correction value that corresponds to the gain.

6. The measurement apparatus according to claim 2 or 3, wherein the signal acquisition unit acquires a signal value that corresponds to the charge of the accumulation portion accumulated in the multiple exposure periods, and the correction unit calculates the first correction value based on the number of the exposure periods.

7. The measurement apparatus according to claim 2 or 3, further comprising: a calculation unit configured to calculate a distance to an object based on the corrected signal value.

*FIG.1A*

1

MEASUREMENT DIRECTION

30

CONTROLLER

| TIMING CONTROLLER | —32 |
| IMAGE ACQUISITION UNIT | —34 |
| CORRECTION UNIT | —35 |
| TIME CALCULATION UNIT | —36 |
| DISTANCE CALCULATION UNIT | —38 |

10

LIGHT EMITTING
UNIT

LIGHT SOURCE —12

IMAGE CAPTURE
UNIT

IMAGE SENSOR —22

20

*FIG.1B*

LIGHT EMISSION

EXPOSURE

repeat n times

FIG.2

MEASUREMENT
DIRECTION

REGION 1     REGION 2     REGION 3     REGION 4

IMAGE OF REGION 1     IMAGE OF REGION 2     IMAGE OF REGION 3     IMAGE OF REGION 4

DISTANCE IMAGE

*FIG.3*

*FIG.4*

IMAGE OF ALL THE REGIONS IS ACQUIRED

| | ZONE 1 | ZONE 2 | ZONE 3 | | | ZONE 1 | ZONE 2 | |

REGION TO BE MEASURED

| REGIONS 1- 4 | REGIONS 5-8 | REGIONS 9 - 12 | ...... | N−3∼N | REGIONS 1 - 4 | REGIONS 5 - 8 | ...... |

Tp                                              Tp

LIGHT EMISSION

EXPOSURE A

EXPOSURE B

EXPOSURE C

EXPOSURE D

LIGHT EMISSION

EXPOSURE 1

EXPOSURE 2

EXPOSURE 3

EXPOSURE 4

EXPOSURE 5

EXPOSURE 6

EXPOSURE 7

EXPOSURE 8

EP 4 468 031 A1

*FIG.5*

$$T_x = T_{j+1} - L_w \times \frac{S_j - S_{min}}{(S_j - S_{min}) + (S_{j+1} - S_{min})}$$

$S_j$, $S_{j+1}$ : signal value of the exposure period for which the reflected light is exposed (in this case, $S_j = S_2$, $S_{j+1} = S_3$)

$S_{min}$ : smallest signal value (in this case, $S_1$ or $S_4$)

$$L = \frac{C_o \times T_x}{2} \quad (C_o: \text{SPEED OF LIGHT})$$

*FIG.6*

$$S_1 = P_b \times (G_1 \times T_{on} + G_{p1} \times T_{off})$$

$$S_2 = P_b \times (G_2 \times T_{on} + G_{p2} \times T_{off}) + Q_{s1} \times G_2$$

$$S_3 = P_b \times (G_3 \times T_{on} + G_{p3} \times T_{off}) + Q_{s2} \times G_3$$

$$S_4 = P_b \times (G_4 \times T_{on} + G_{p4} \times T_{off})$$

$P$ : intensity of light

$G_i$ : gain during exposure

$T_{on}$ : width of exposure period (in this case $T_{on} = Lw$)

$T_{off}$ : width of non-exposure period

$G_{pi}$ : gain during non-exposure period

$Q_s$ : amount of light (product of intensity Ps of reflected light and exposure time t of reflected light)

*FIG.7*

```
┌──────────┐    ┌──────────┐    ┌──────────┐         ┌──────────┐
│ SENSOR   │    │FPN REMOVE│    │          │    ╱─╲   │          │
│ OUTPUT   │───▶│AND THE   │───▶│  x α i   │──▶│ ─ │─▶│  x β i   │──▶
│ DATA     │    │LIKE      │    │          │    ╲─╱   │          │
└──────────┘    └──────────┘    └──────────┘     │    └──────────┘
                                     │           │
                                     │    ┌──────────────┐
                                     └───▶│MINIMUM VALUE │
                                          │DETECTION     │
                                          └──────────────┘
```

FIG.8

100

1

120

DARK ROOM

*FIG.9*

$$T_x'' = T_3 - Lw \times \frac{S_2}{S_2 + S_3}$$

$$T_x' = T_3 - Lw \times \frac{S_2 - S_1}{S_2 + S_3 - 2S_1}$$

$$\left( L = \frac{Co \times T_x}{2} \right)$$

## INTERNATIONAL SEARCH REPORT

International application No.

**PCT/JP2022/043297**

### A. CLASSIFICATION OF SUBJECT MATTER

*G01S 7/4915*(2020.01)i; *G01C 3/06*(2006.01)i; *G01S 17/894*(2020.01)i
FI:   G01S7/4915; G01S17/894; G01C3/06 120Q; G01C3/06 140

According to International Patent Classification (IPC) or to both national classification and IPC

### B. FIELDS SEARCHED

Minimum documentation searched (classification system followed by classification symbols)

G01S7/48-7/51; G01S17/00-17/95; G01C3/00-3/32

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2008-249673 A (FUJIFILM CORP) 16 October 2008 (2008-10-16) | 1 |
| | claims, paragraphs [0037]-[0081], fig. 3, 6-8 | |
| A | | 2-7 |
| X | JP 2020-052001 A (PANASONIC IP MAN CORP) 02 April 2020 (2020-04-02) | 1 |
| | paragraphs [0051]-[0057], [0085]-[0103], fig. 3, 5-7 | |
| A | | 2-7 |
| A | JP 2019-191118 A (SONY SEMICONDUCTOR SOLUTIONS CORP) 31 October 2019 (2019-10-31) | 2-7 |
| | entire text, all drawings | |
| A | WO 2021/177045 A1 (SONY GROUP CORP) 10 September 2021 (2021-09-10) | 2-7 |
| | entire text, all drawings | |
| P, A | JP 7014324 B1 (TOPPAN INC) 15 February 2022 (2022-02-15) | 1–7 |
| | entire text, all drawings | |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 December 2022** | **27 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/043297**

| Patent document cited in search report | | | Publication date (day/month/year) | Patent family member(s) | | | Publication date (day/month/year) |
|---|---|---|---|---|---|---|---|
| JP | 2008-249673 | A | 16 October 2008 | (Family: none) | | | |
| JP | 2020-052001 | A | 02 April 2020 | (Family: none) | | | |
| JP | 2019-191118 | A | 31 October 2019 | US | 2019/0331776 | A1 | |
| | | | | entire text, all drawings | | | |
| | | | | EP | 3572834 | A1 | |
| | | | | CN | 110412599 | A | |
| | | | | AU | 2019201805 | A | |
| | | | | KR | 10-2019-0125170 | A | |
| | | | | TW | 201945757 | A | |
| WO | 2021/177045 | A1 | 10 September 2021 | (Family: none) | | | |
| JP | 7014324 | B1 | 15 February 2022 | WO | 2022/185967 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021025833 A

- JP 2022007779 A

**Non-patent literature cited in the description**

- *Lateral Electric Field Controlled ToF Distance Image Sensor with Intra-pixel Background Light Cancelling Function Technical Report*, 2014